Europäisches Patentamt

European Patent Office

Office européen des brevets

(19)

(11) Publication number: **0 189 882 B1**

# EUROPEAN PATENT SPECIFICATION

(12)

(45) Date of publication of patent specification: **27.03.91**   (51) Int. Cl.⁵: **G01N 25/20**, G01N 25/48

(21) Application number: **86101045.2**

(22) Date of filing: **27.01.86**

(54) **Apparatus for thermal analysis.**

(30) Priority: **30.01.85 JP 17075/85**

(43) Date of publication of application:
**06.08.86 Bulletin 86/32**

(45) Publication of the grant of the patent:
**27.03.91 Bulletin 91/13**

(84) Designated Contracting States:
**DE FR GB**

(56) References cited:
**CH-A- 573 114**
**CH-A- 644 694**
**DE-A- 3 302 017**
**US-A- 3 981 175**

(73) Proprietor: **SHIMADZU CORPORATION**
**378, Ichinofunairi-cho Kawaramachi-dori Nijo**
**Sagaru**
**Nakagyo-ku Kyoto 604(JP)**

(72) Inventor: **Maruta, Michio**
**1-29-2, Ohira Otsu-shi**
**Shiga-ken(JP)**
Inventor: **Uchiike, Mitsumasa Shofuso Minami**
**36-goshitsu**
**Tanakahigashi-haruna-cho 23 Sakyo-ku**
**Kyoto-shi, Kyoto(JP)**

(74) Representative: **Modiano, Guido et al**
**MODIANO, JOSIF, PISANTY & STAUB**
**Modiano & Associati Via Meravigli, 16**
**I-20123 Milano(IT)**

## Description

### FIELD OF THE INVENTION AND RELATED ART STATEMENT

This invention relates to an apparatus for thermal analysis for measuring the properties of samples while varying the temperature thereof, the apparatus further being capable of feeding measurement data and measuring condition data to an analysis data control system for collecting and processing analysis data.

Apparatus for thermal analysis for measuring variations in the physical or chemical properties of substances in terms of a function of temperature employ various techniques including differential thermal analysis, mechanical thermal analysis, thermogravimetric analysis and the like. The heating furnace for use in such apparatus for varying the temperature of the sample comprises, for example, an electric furnace having a ceramic tube and a heater in the form of a nichrome wire wound around the peripheral wall of the tube. The temperature of the furnace is automatically controlled according to a predetermined temperature program. While the heating furnace is used also at temperatures of up to $0°$ C, the furnace is then cooled with liquid nitrogen from outside. In addition to thermal analyzers having only one heating furnace, those comprising a plurality of heating furnaces have also been developed. Thermal analyzers of the latter type include those wherein the heating furnaces are controlled by a single temperature program control device, each according to a temperature program specific thereto (see Unexamined Japanese Utility Model Publication SHO 56-122945)

A thermoanalytical system is disclosed by Swiss Patent CH-A6-644 694). The Swiss Patent shows apparatus for thermoanalytical testing with closed loop control, the apparatus including a furnace sensor means for detecting the physical properties of a sample placed in the furnace, an A/D converter for converting the value determined by the sensor to a digital signal, a memory for storing reference values therein, a processor adapted to generate a control signal in dependence on the digital signal and the stored reference values. Furthermore, the apparatus of CH-A6-644 694 provides for a furnace heat-control device which is controlled, via a D/A converter, by the processor's control signal.

Although conventional thermal analyzers are adapted to independently collect measurement data, they are not so designed as to feed the collected data directly to an external analysis data control system. Accordingly, if it is attempted to collect thermal analysis data in an analysis data control system, it is necessary to provide a data processing system specific to the thermal analyzer for transferring data from the analyzer to the control system via a specific interface. In this case, the thermal analyzer, the data processing system and the analysis data control system must be controlled at the same time.

### SUMMARY OF THE INVENTION

An object of this invention is to provide an apparatus for thermal analysis from which measurement data and measuring condition data can be easily and directly fed to an analysis data control system via an interface of the universal type. The mentioned object and others which will become apparent hereinafter are achieved by an apparatus for thermal analysis, as in the accompanying claims.

Stated more specifically, the invention provides an apparatus for thermal analysis comprising a heating furnace, a detector for detecting the physical properties of a sample placed in the furnace, an A/D converter for converting the value detected by the detector to a digital signal, data memory means for storing the digital detected value, temperature program memory means having stored therein temperature control conditions for the heating furnace, calculating means for calculating and delivering a temperature control value for the heating furnace by comparing the temperature detected by the detector with a target value in a specified program included in the temperature control conditions, a D/A converter for converting the output signal from the calculating means to an analog signal, a temperature controller for controlling the supply of current to the heating furnace in accordance with the output signal from the D/A converter, an interface connected to the data memory means and the temperature program memory means for feeding out data read therefrom, and instruction set judging means for judging instructions received by the interface for permitting data to be read from the data memory means and the temperature program memory means and to be delivered to the interface with timing that will not influence thermal analysis measurement.

The invention further provides an apparatus for thermal analysis comprising a plurality of heating furnaces, a detector provided for each of the furnaces for detecting the physical properties of a sample in the furnace, an A/D converter for converting the value detected by the detector to a digital signal, data memory means for storing the digital detected value, temperature program memory means having stored therein temperature control conditions for the heating furnaces, calculating means for calculating and delivering a temperature control value for the heating funace by comparing the temperature detected by the detector with a target value in a specified program included in the temperature control conditions, a D/A converter for converting the output signal from the calculating means to an analog signal, a temperature controller provided for each of the heating furnaces for controlling the supply of current to the heating furnace in accordance with the corresponding output signal from the D/A converter, an interface connected to the data memory means and the temperature program memory means for feeding out data read therefrom, instruction set judging means for judging instructions received by the interface for permitting data to be read from the data memory means and the temperature program memory means and to be delivered to the interface with timing that will not influence thermal analysis measurement, a first signal selector provided between the detectors of the heating furnaces and the A/D converter for connecting the A/D converter selectively to the detector of one of the furnaces, and a second signal selector provided between the D/A converter and the temperature controllers of the heating furnaces for connecting the D/A converter selectively to the temperature controller of one of the furnaces.

The thermal analysis apparatus of the invention provides read data at an interface without affecting thermal analysis measurement and therefore has the following advantages.

(1) Data can be fed directly from the main body of the apparatus to an analysis data control system without necessitating any intervening special data processing unit or special interface.

(2) The apparatus measures properties without any regard to the analysis data control system, while the analysis data control system collects thermal analysis data without disturbing the measuring operation of the apparatus.

## BRIEF DESCRIPTION OF THE DRAWINGS

Fig. 1 is a block diagram schematically showing an apparatus of the invention;

Fig. 2 is a block diagram showing the circuit of an embodiment of the invention;

Fig. 3 is a flow chart showing the operation of the embodiment; and

Fig. 4 is a block diagram showing the embodiment as connected to a large-sized computer.

## DESCRIPTION OF THE PREFERRED EMBODIMENT

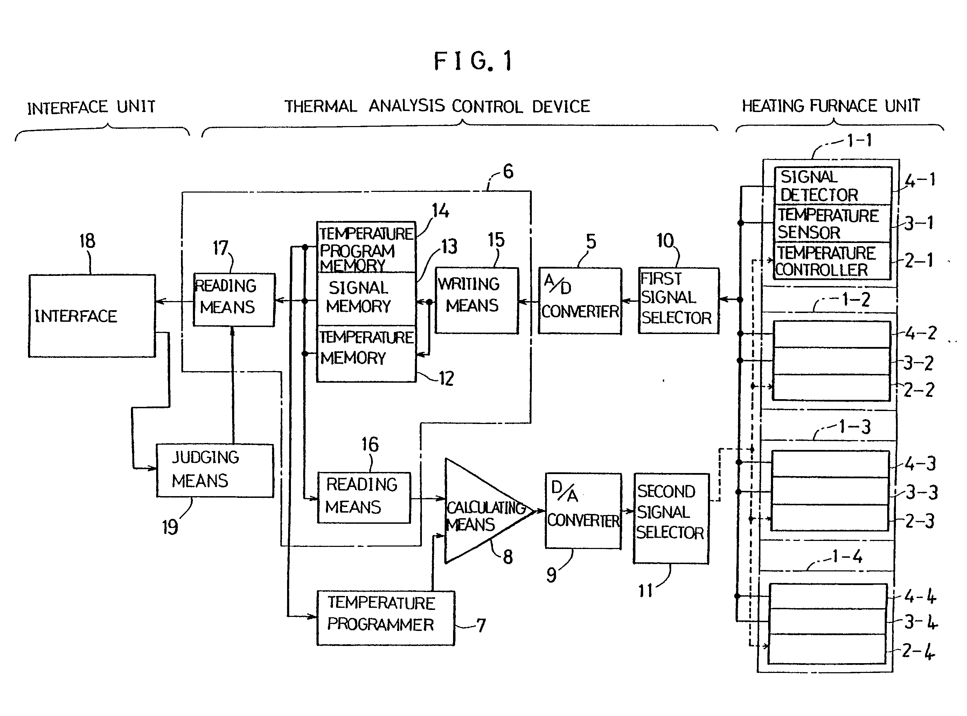

The present invention provides an apparatus for use in the fields of pharmaceuticals, foods, high polymers, electronic materials, ceramics, etc. for analyzing thermal properties of substances. As schematically shown in Fig. 1, the apparatus comprises a heating furnace unit, a thermal analysis control device and an interface unit.

The heating furnace unit comprises one or more heating furnaces, and one or more detectors for detecting the physical properties of samples. The drawing shows four heating furnaces 1-1 to 1-4 for illustrative purposes, but the number of furnaces is not limitative. A sample is accommodated in each of the furnaces 1-1 to 1-4. The furnaces 1-1 to 1-4 are provided with temperature controllers 2-1 to 2-4, respectively, for electrically heating the furnace according to a temperature program.

One detector is provided for each furnace. Each detector comprises a temperature sensor 3-1 (3-2, 3-3 or 3-4) including an element for measuring the temperature of the sample and a preamplifier, and a signal detector 4-1 (4-2, 4-3 or 4-4) for measuring the weight or length of the sample, amount of evaporation, amount of heat evolved or absorbed, temperature difference between the test sample and reference sample, or the like according to the method of analysis used.

The temperature measuring element of the temperature sensor comprises a differential thermal analyzer including a thermocouple, thermistor, heat-sensitive platinum member or the like. One the other hand, one of the following devices is used as the signal detector depending on the measurement to be obtained.

(a) Thermobalance and DTA-TG simultaneous measuring device when measuring the weight of sample.

(b) Dilatometer when measuring the length of sample.

(c) Differential scanning calorimeter when measuring the quantity of heat of sample.

(d) Differential thermal analyzer when measuring the temperature difference between the test sample and the reference sample. The temperature controller comprises a triac or relay circuit.

The thermal analysis control device comprises an A/D converter 5 for converting detection signals from the temperature sensors 3-1 to 3-4 and the signal detectors 4-1 to 4-4 to digital signals, a memory unit 6 including the data memory means to be stated later and adapted for storing the converted detection signals at a given period, a temperature programmer 7 for setting temperature programs for electrically heating the heating furnaces 1-1 to 1-4, calculating means 8 for comparing the temperature of sample detected with the temperature set by the programmer 7 and calculating and delivering a value for controlling the corresponding one of the furnaces 1-1 to 1-4, and a D/A converter 9 for converting the output signal from the calculating means 8 to an analog signal and feeding the signal to the corresponding one of the temperature controllers 2-1 to 2-4. When the furnace unit comprises at least two heating furnaces, the control device further includes a first signal selector 10 for selectively connecting the temperature sensor or the signal detectors of the detector of one of the furnaces to the A/D converter 5, and a second signal selector 11 for selectively connecting the D/A converter 9 to the temperature controller of one of the furnaces.

The memory unit 6 comprises a temperature memory 12 for storing the temperatures detected by the temperature sensors 3-1 to 3-4 and converted to digital values, a signal memory 13 for storing the digital values converted from detection signals from the signal sensors 4-1 to 4-4, and a temperature program memory 14 having stored various temperature programs including temperature control conditions. The temperature memory 12 and signal memory 13 constitute the data memory of the present invention. The desired temperature program is delivered from the memory 14 to the programmer 7 for setting. Data is transferred from the A/D converter 5 to the temperature memory 12 and the signal memory 13 via writing means 15. Temperature data is read from the temperature memory 12 by reading means 16 and given to the calculating means 8. Data is read from the temperature memory 12, the signal memory 13 and the temperature program memory 14 by reading means 17 and delivered to the interface 18 to be stated below.

The interface unit comprises the above-mentioned interface 18 which is of the universal type and responsive to instructions from outside for permitting the reading means 17 to read the desired data and temperature control condition data from the temperature memory 12, the signal memory 13 and the temperature program memory 14 and feeding out the data, and an instruction set judging means 19 for judging the instruction received by the interface 18 from outside and controlling the reading means 17 to permit the means 17 to read the desired data and temperature control condition data with timing that will not influence thermal analysis measurement.

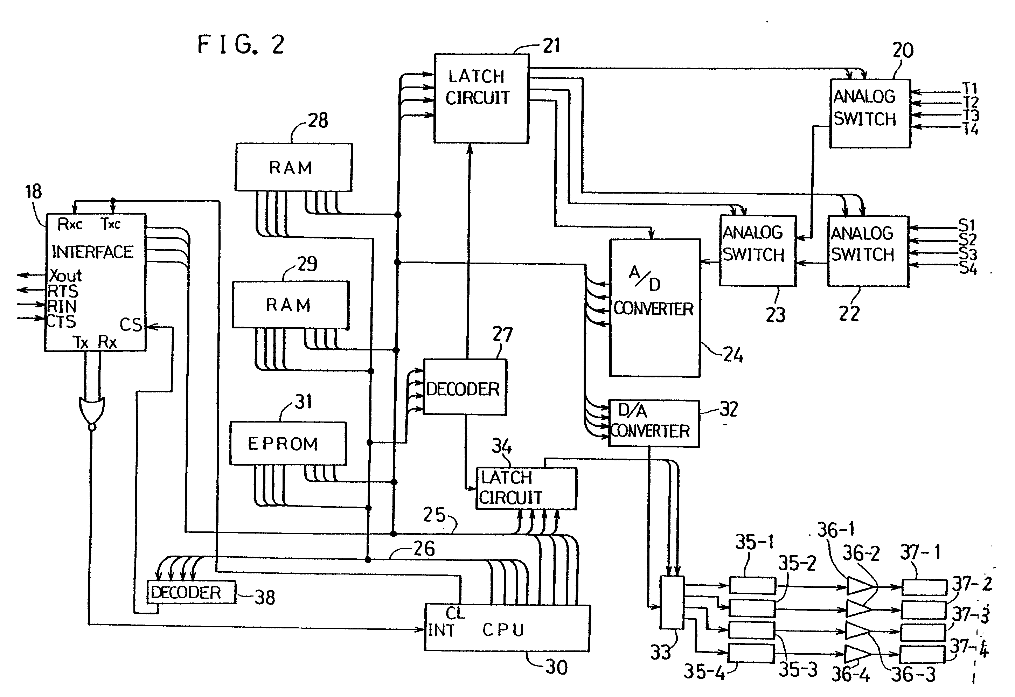

Fig. 2 shows an embodiment having four heating furnaces like the one shown in Fig. 1. While the drawing does not show the heating furnaces 1-1 to 1-4, the temperature sensors 3-1 to 3-4 and the signal detectors 4-1 to 4-4 of the furnace unit shown in Fig. 1, the detected temperature signals from the temperature sensors 3-1 to 3-4 are indicated at T1 to T4, and the detection signals from the detectors sensors 4-1 to 4-4 are designated at S1 to S4 respectively. An analog switch 20 receives the signals T1 to T4 and selectively delivers one of the signals T1 to T4 in response to an output signal from a latch circuit 21. An analog switch 22 receives the signals S1 to S4 and selectively delivers one of the signals S1 to S4 in response to an output signal from the latch circuit 21. An analog switch 23 receives as input signals the output signals from the analog switches 20 and 22 and feeds one of these input signals to an A/D converter 24 in response to an output signal from the latch circuit 21. The operation of the A/D converter 24 is controlled also by the latch circuit 21. The latch circuit 21 is connected to a data bus 25 and controlled by an output signal from a decoder 27 connected to an address bus 26. According to the present embodiment, both the data bus 25 and the address bus 26 are of 4-bit structure. These analog switches 20, 22, 23, latch circuit 21 and decoder 27 constitute the first signal selector 10 shown in Fig. 1.

The selected one of the signals T1 to T4 and S1, to S4 converted to a digital signal by the A/D converter 24 corresponding to the A/D converter 5 of Fig. 1 is delivered to the data bus 25 and stored in a predetermined location in a RAM 28 or RAM 29 by a CPU (central processing unit) 30. The RAM 28 and the RAM 29 correspond respectively to the temperature memory 12 and the signal memory 13 of Fig. 1.

By the CPU 30, the desired temperature program is read from EPROM 31 which corresponds to the temperature program memory 14 shown in Fig. 1 and which also serves as the temperature programmer 7 of Fig. 1.

A temperature control signal prepared by the CPU 30 by comparison with the temperature program to control the temperature of the furnace concerned according to the program is converted to an analog signal by a D/A converter 32. The CPU 30 performs the function of the calculating means 8 of Fig. 1 for preparing the control signal.

An analog switch 33 has its output selected by a latch circuit 34. The temperature control signal converted to an analog signal by the D/A converter 32 is delivered from the switch 33 to one of sample holding circuits 35-1 to 35-4, which hold the input signal level. The output signal of the holding circuit is amplified by one of amplifiers 36-1 to 36-4 and fed to the corresponding one of heater controllers 37-1 to 37-4. The decoder 27, the latch circuit 34 and the analog switch 33 constitute the second signal selector 11 of Fig. 1. The sample holding circuits 35-1 to 35-4, the amplifiers 36-1 to 36-4 and the heater controllers 37-1 to 37-4 constitute the temperature controllers 2-1 to 2-4 of Fig. 1, respectively.

The interface 18 is, for example, an interface for universal use according to RS232C standard. The interface 18 is connected to the CPU 30 by the data bus 25 for the transmission of data and has Tx and Rx terminals which feed signals to NOR logic circuit, which in turn feeds an interrupt output to INT terminal of the CPU 30. The interface 18 is on-off controlled by a decoder 38 according to an address signal from the CPU 30. The CPU 30 provides clock pulses to RxC and TxC terminals of the interface 18. Via Xout, RTS, RIN and CTS terminals, the interface 18 is connected to an external analysis data control system (e.g. large-sized computer). The item of data to be sent out from the Xout terminal of the interface 18 is determined by the set of instructions given to the RIN terminal, for example, as mentioned below.

| | |
|---|---|
| TTT... | to read the temperature of sample at the time concerned. |
| SSS... | to read the signal at the time concerned. |
| RRR... | to read measurement sensitivity. |
| PPP... | to read temperature program. |
| DDD... | to continuously send out temperature and signal in response to timing signal of the thermal analysis apparatus. The set of instructions received by the RIN terminal is identified by the CPU 30. Accordingly, the CPU 30 performs the function of the instruction set judging means 19 of Fig. 1. |

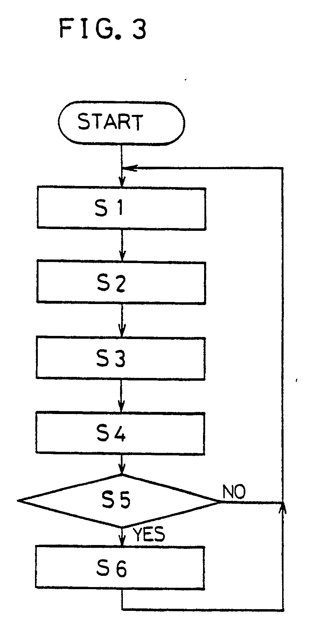

The operation of the present embodiment will be described with reference to Fig. 3.

Sample temperatures T1 to T4 and signals S1 to S4 are selectively read in succession and are stored in the memories concerned (RAM's 28, 29) in steps S1, S2. A temperature control signal is prepared based on the difference between the read sample temperature and a target temperature value on the temperature program and is fed to the temperature controller of the furnace concerned by way of the D/A converter 32 (steps S3,S4). Thus, this process controls the temperature of the furnace according to the temperature program. Unless a set of instructions is fed to the RIN terminal of the interface 18 from outside in step S5, the process is executed for each of the furnaces selectively in succession. The control process is the same as the furnace temperature control disclosed in the afore mentioned publication SHO 56-122945.

When a set of instructions is given to the interface 18 by an external system, the set of instructions is read and identified, whereupon the specified data is read from the memory concerned (RAM 28 or 29 or EPROM 31) and transferred to the external system via the interface 18 (step S6). Step S1 thereafter follows again to repeat the furnace temperature control process.

Since the interrupt operation of step S6 is conducted within a sufficiently short period of time unlike the response of the furnaces, the interrupt instruction input, if given to the CPU 30 from outside, produces no substantial influence on the temperature control of the furnaces.

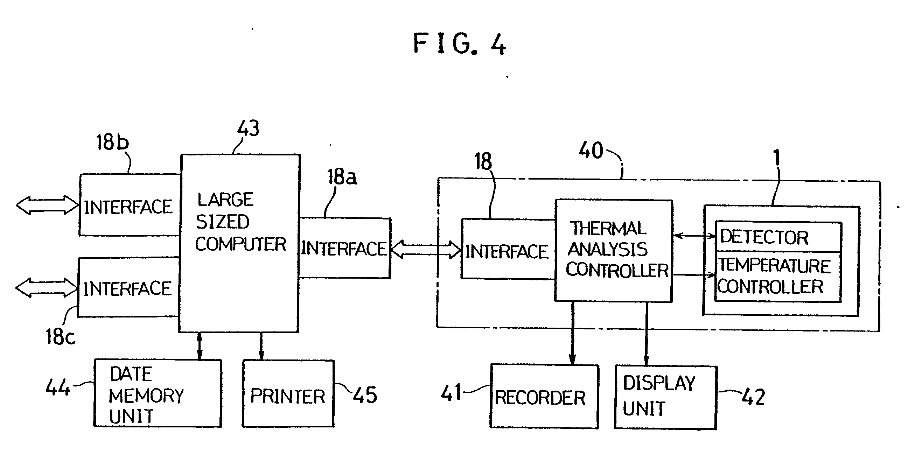

Fig. 4 shows an embodiment wherein an apparatus of the invention for thermal analysis is connected to a large-sized computer as an analysis data control system.

Indicated at 40 is a thermal analysis apparatus similar to the one shown in Fig. 2. A recorder 41 and a display unit 42, such as CRT, are connected to the apparatus 40. The apparatus 40 is connected to a large-sized computer 43 via interfaces 18 and 18a of the universal type for bidirectional communication. The computer 43 is equipped with a data memory unit 44 such as a hard disc unit, and a report output unit such as a printer 45.

The computer 43 can be provided with other interfaces of the universal type as indicated at 18b and 18c. Via these interfaces, the computer can be connected to other thermal analyzers or analyzers such as electronic balance, gas chromatographic unit, etc. Thus, a large number of items of data can be simultaneously collected, processed, stored, or retrieved at terminal devices by making use of the characteristics of the large-sized computer 43. The kind of data to be collected by the computer 43 and the collection time are changeable as desired according to the software to be incorporated into the computer 43. Irrespective of the mode of data collection, the analysis or measurement by the apparatus 40 can be carried out without being thereby influenced.

Because data is handled via interfaces of the universal type such as those of RS232C standard with the present invention, the large-sized computer serving as the analysis data control system can be replaced by a personal computer which is similarly equipped with interfaces of the universal type.

Because the analysis apparatus need not be operated specifically for data collection, the apparatus and the data control system may be operated by different persons.

Where technical features mentioned in any claim are followed by reference signs, those reference signs have been included just for the sole purpose of increasing intelligibility of the claims and accordingly, such reference signs do not have any limiting effect on the scope of each element identified by way of example by such reference signs.

## Claims

1. An apparatus for thermal analysis comprising :
   a heating furnace (1-1)

a detector (3-1,4-1) for detecting the physical properties of a sample placed in said heating furnace,
an A/D converter (5,24) for converting the value determined by the detector to a digital signal,
data memory means (13) for storing the digital detected value,
temperature memory (14) means having stored therein temperature control conditions for said heating furnace,
calculating means (8) for calculating and delivering a temperature control value for said heating furnace, by comparing a temperature detected by the detector with a target value in a specified program included in the temperature control conditions,
a D/A converter (9,32) for converting the output signal from the calculating means to an analog signal, and
a temperature controller (2-1) provided to said heating furnace, for controlling the supply of current to said furnace in accordance with the output signal from said D/A converter,
CHARACTERIZED
by an interface (18) connected to the data memory means and the temperature program memory means for feeding out data read therefrom and by
instruction set judging means (19,30) for judging instructions received by the interface for permitting data to be read from the data memory means and the temperature program memory means, and to be delivered to the interface, said judging means having a timing that is sufficiently shorter than the response time for controlling the temperature of said heating furnace.

2. An apparatus for thermal analysis comprising:
a plurality heating furnaces (1-1,1-2,1-3,1-4),
a plurality of detectors (3-1,4-1,3-2,4-2,3-3,4-3,3-4,4-4) for detecting the physical properties of a sample, with one detector placed in a respective heating furnace,
an A/D converter (5,24) for converting the value determined by the detectors to a digital signal,
data memory means (13) for storing the digital detected value,
temperature memory (14) means having stored therein temperature control conditions for said heating furnaces,
calculating means (8) for calculating and delivering a temperature control value for said heating furnaces, by comparing a temperature detected by the detector with a target value in a specified program included in the temperature control condition,
a D/A converter (9,32) for converting the output signal from the calculating means to an analog signal, and
a plurality of temperature controllers (2-1,2-2,2-3,2-4) with one controller provided to a respective heating furnace, for controlling the supply of current to the furnace in accordance with the corresponding output signal from said D/A converter,
CHARACTERIZED
by an interface (18) connected to the data memory means and the temperature program memory means for feeding out data read therefrom and by
instruction set judging means (19,30) for judging instructions received by the interface for permitting data to be read from the data memory means and the temperature program memory means, and to be delivered to the interface, said judging means having a timing that is sufficiently shorter than the response time for controlling the temperature of said heating furnace, whereby a first signal selector (10) is provided between the detectors of said heating furnaces and the A/D converter, for selectively connecting the A/D converter to one of said detectors, a second signal selector (11) being provided between said D/A converter and said temperature controllers for connecting said D/A converter to one of said temperature controllers.

3. The apparatus according to any of the preceding claims, characterized in that each said detector (3-1,4-1) comprises:
a differential thermal analyzer for detecting the temperature of said sample,
a thermobalance and a DTA-TG simultaneous measuring instrument for measuring the weight of the sample,
a dilatometer for measuring the length of the sample,
a differential scanning calorimeter for measuring the quantity of heat of the sample, or
a differential thermal analyzer for measuring the temperature difference between the sample and a reference sample.

## Revendications

1. Appareil d'analyse thermique comportant:
un four de chauffage (1-1),
un détecteur (3-1, 4-1) pour détecter les propriétés physiques d'un échantillon placé dans ledit four de chauffage,

un convertisseur analogique/numérique (5, 24) pour convertir la valeur déterminée par le détecteur en un signal numérique,

des moyens à mémoire de données (13), pour mémoriser la valeur numérique détectée,

des moyens à mémoire de températures (14) contenant des conditions de commande de température dudit four de chauffage qui y sont mémorisées,

des moyens de calcul (8) pour calculer et fournir une valeur de commande de température pour ledit four de chauffage, en comparant la température détectée par le détecteur à une valeur de consigne d'un programme spécifié compris dans les conditions de commande de température,

un convertisseur numérique/analogique (9; 32) pour convertir le signal de sortie des moyens de calcul en un signal analogique, et

un organe de commande de température (2-1) prévu pour ledit four de chauffage afin de commander l'alimentation en courant dudit four en accord avec le signal de sortie dudit convertisseur numérique/analogique, CARACTERISE

par une interface (18) reliée aux moyens à mémoire de données et aux moyens à mémoire du programme de températures pour transmettre les données qui y sont reprises et par des moyens de jugement d'instructions (19, 30) pour juger les instructions reçues par l'interface et permettre la reprise de données danss les moyens à mémoire de données et dans les moyens à mémoire du programme de températures ainsi que leur transmission à l'interface, lesdits moyens de jugement ayant un temps de fonctionnement suffisamment plus court que le temps de réponse correspondant à la commande de la température dudit four de chauffage.

2. Appareil d'analyse thermique comportant :

une pluralité de fours de chauffage (1-1, 1-2, 1-3, 1-4),

une pluralité de détecteurs (3-1, 4-1, 3-2, 4-2, 3-3, 4-3, 3-4, 4-4) pour détecter les propriétés physiques d'un échantillon, un détecteur étant placé dans un four de chauffage respectif,

un convertisseur analogique/numérique (5, 24) pour convertir la valeur détectée par les détecteurs en un signal numérique,

des moyens à mémoire de données (13) pour mémoriser la valeur numérique détectée,

des moyens à mémoire de températures (14) contenant des conditions de commande de température dudit four de chauffage qui y sont mémorisées,

des moyens de calcul (8) pour calculer et fournir une valeur de commande de température pour lesdits fours de chauffage, en comparant la température détectée par le détecteur à une valeur de consigne d'un programme spécifié compris dans les conditions de commande de température,

un convertisseur numérique/analogique (9, 32) pour convertir le signal de sortie des moyens de calcul en un signal analogique, et

une pluralité d'organes de commande de température (2-1, 2-2, 2-3, 2-4), un organe de commande étant prévu pour un four de chauffage respectif afin de commander l'alimentation en courant du four en accord avec le signal de sortie correspondant dudit convertisseur numérique/analogique, CARACTERISE

par une interface (18) reliée aux moyens à mémoire de données et aux moyens à mémoire du programme de températures pour transmettre les données qui y sont reprises et par

des moyens de jugement d'instructions (19, 30) pour juger les instructions reçues par l'interface et permettre la reprise de données dans les moyens à mémoire de données et dans les moyens à mémoire du programme de températures ainsi que leur transmission à l'interface, lesdits moyens de jugement ayant un temps de fonctionnement suffisamment plus court que le temps de réponse correspondant à la commande de la température dudit four de chauffage, un premier sélecteur de signaux (10) étant alors prévu entre les détecteurs desdits fours de chauffage et le convertisseur analogique/numérique pour relier sélectivement ce convertisseur analogique/numérique à l'un desdits détecteurs, un second sélecteur de signaux (11) étant prévu entre ledit convertisseur numérique/analogique et lesdits organes de commande de température pour relier ledit convertisseur numérique/analogique à l'un desdits organes de commande de température,

3. Appareil selon l'une quelconque des revendications précédentes, caractérisé en ce que chacun desdits détecteurs (3-1, 4-1) comporte :

un analyseur thermique différentiel pour détecter la température dudit échantillon,
un instrument de mesure comportant en même temps une thermobalance et un organe à gradient de température ATD pour mesurer le poids de l'échantillon,
un dilatomètre pour mesurer la longuer de l'échantillon,
un calorimètre à analyse différentielle pour mesurer la quantité de chaleur de l'échantillon, ou
un analyseur thermique différentiel pour mesurer la différence de température entre l'échantillon et un échantillon de référence.

## Ansprüche

1. Vorrichtung zur thermischen Analyse mit:
einem Heizofen (1-1),
einem Detektor (3-1, 4-1) zum Ermitteln der physikalischen Eigenschaften einer Probe, die in den Heizofen gesetzt ist,
einem A/D-Wandler, (5, 24) zum Umsetzen der vom Detektor festgestellten Werte in ein digitales Signal,
einer Datenspeichereinrichtung (13) zum Speichern der ermittelten digitalen Wertes,
einer Temperaturspeichereinrichtung (14), in der Temperaturregelbedingungen für den Heizofen gespeichert sind,
einer Recheneinrichtung (8) zum Berechnen und übergeben eines Temperaturregelwertes für den Heizofen, indem sie eine vom Detektor ermittelte Temperatur mit einem Sollwert in einem vorgeschriebenen Programm vergleicht, das in den Temperaturregelbedingungen enthalten ist,
mit einem D/A-Wandler (9, 32) zum Umsetzen des Ausgabesignals der Recheneinrichtung in ein analoges Signal, und
einem Temperaturregler (2-1), der für den Heizofen vorgesehen ist, um die Stromzufuhr zum Ofen in Übereinstimmung mit dem Ausgabesignal des D/A-Wandlers zu regeln, **gekennzeichnet durch**
eine Schnittstelle (18) zwischen der Datenspeichereinrichtung und der Temperaturprogrammspeichereinrichtung zur Ausgabe dort ausgelesener Daten und
durch eine Befehlsvorratbeurteilungseinrichtung (19, 30) zum Beurteilen der von der Schnittstelle erhaltenen Befehle, um zu erlauben, daß Daten von der Datenspeichereinrichtung und der Temperaturprogrammspeichereinrichtung ausgelesen und an die Schnittstelle übergeben werden, wobei die Beurteilungseinrichtung eine zeitliche Steuerung aufweist, die ausreichend kürzer ist als die Ansprechzeit zum Regeln der Temperatur des Heizofens.

2. Vorrichtung zur thermischen Analyse mit:
einer Vielzahl an Heizöfen (1-1, 1-2, 1-3, 1-4),
einer Vielzahl an Detektoren (3-1, 4-1, 3-2, 4-2, 3-3, 4-3, 3-4, 4-4) zum Ermitteln der physikalischen Eigenschaften einer Probe, mit einem in jeweils einem Heizofen angeordneten Detektor,
einem A/D-Wandler (5, 24) zum Umsetzen des vom Detektor festgestellten Wertes in ein digitales Signal,
einer Datenspeichereinrichtung (13) zum Speichern des ermittelten digitalen Wertes,
einer Temperaturspeichereinrichtung (14), in der Temperaturregelbedingungen für den Heizofen gespeichert sind,
einer Recheneinrichtung (8) zum Berechnen und Übergeben eines Temperaturregelwertes für die Heizöfen, indem sie eine vom Detektor ermittelte Temperatur mit einem Sollwert in einem vorgeschriebenen Programm vergleicht, das in den Temperaturregelbedingungen enthalten ist,
einem D/A-Wandler (9, 32) zum Umsetzen des Ausgabesignals der Recheneinrichtung in ein Analogsignal, und
einer Vielzahl an Temperaturreglern (2-1, 2-2, 2-3, 2-4) mit jeweils einem Regler pro Heizofen, um die Stromzufuhr zum Ofen in Übereinstimmung mit dem entsprechenden Ausgabesignal des D/A-Wandlers zu regeln, **gekennzeichnet durch**
eine Schnittstelle (18) zwischen der Datenspeichereinrichtung und der Temperaturprogrammspeichereinrichtung zur Ausgabe dort ausgelesener Daten und durch
eine Befehlsvorratbeurteilungseinrichtung (19, 30) zum Beurteilen der von der Schnittstelle erhaltenen Befehle, um zu erlauben, daß Daten von der Datenspeichereinrichtung und der Temperaturprogrammspeichereinrichtung ausgelesen und an die Schnittstelle übergeben werden, wobei die Beurteilungseinrichtung eine zeitliche Steuerung aufweist, die ausreichend kürzer ist als die Ansprechzeit zum Regeln der Temperatur des Heizofens, wodurch ein erster Signalselektor (10) zwischen den Detektoren der Heizöfen und dem A/D-Wandler geschaffen wird, um auswählend den A/D-Wandler mit einem der Detektoren zu verbinden, wobei ein zweiter Signalselektor (11) zwischen dem D/A-Wandler und den Temperaturreglern geschaffen wird, um den D/A-Wandler mit einem der Temperaturregler zu verbinden.

3. Vorrichtung nach einem der vorherigen Ansprüche, dadurch gekennzeichnet, daß jeder Detektor (3-1, 4-1)

einen Differenzthermoanalysierer zum Ermitteln der Temperatur der Probe,

ein Meßgerät zum gleichzeitigen Einsatz als Thermowaage und zur Differenzthermoanalyse (DTA-TG), um das Gewicht der Probe zu messen,

einen Dilatometer zum Messen der Länge der Probe,

einen Differentialkalorimeter zum Messen der Wärmemenge der Probe, oder

einen Differenzthermoanalysierer zum Messen des Temperaturunterschiedes zwischen der Probe und einer Referenzprobe aufweist.

# FIG. 1

INTERFACE UNIT  THERMAL  ANALYSIS  CONTROL  DEVICE  HEATING FURNACE UNIT

EP 0 189 882 B1

FIG. 2

# FIG. 3

START → S 1 → S 2 → S 3 → S 4 → S 5 (NO / YES) → S 6

# F I G. 4

EP 0 189 882 B1